# FASCICULE DE BREVET EUROPEEN

(11) **EP 4 124 244 B1**
(45) Date de publication et mention de la délivrance du brevet: **25.12.2024**
(21) Numéro de dépôt: 22186510.8
(22) Date de dépôt: 22.07.2022
(51) Int. Cl.: A23C 21/00, A23C 21/08

(54) **MATRICE ALIMENTAIRE ENRICHIE EN PROTÉINES DE LACTOSÉRUM DÉNATURÉES ET PROCÉDÉ DE DÉNATURATION DE PROTÉINES DE LACTOSÉRUM ET DE FABRICATION D'UNE MATRICE ALIMENTAIRE ENRICHIE EN PROTÉINES DE LACTOSÉRUM DÉNATURÉES**
NAHRUNGSMITTELMATRIX, DIE MIT DENATURIERTEN MOLKEPROTEINEN ANGEREICHERT IST, VERFAHREN ZUR DENATURIERUNG VON MOLKEPROTEINEN UND ZUR HERSTELLUNG EINER MIT DENATURIERTEN MOLKEPROTEINEN ANGEREICHERTEN NAHRUNGSMITTELMATRIX
FOOD MATRIX ENRICHED WITH DENATURED WHEY PROTEINS AND METHOD FOR DENATURING WHEY PROTEINS AND FOR MANUFACTURING A FOOD MATRIX ENRICHED WITH DENATURED WHEY PROTEINS

(30) Priorité: 30.07.2021 FR 2108332
(43) Date de publication de la demande: 01.02.2023
(73) Titulaire: Panprot, 54690 Lay-Saint-Christophe (FR)
(72) Inventeur: QUILLIOT, Didier, 54690 LAY-ST-CHRISTOPHE (FR)
(74) Mandataire: Cabinet Bleger-Rhein-Poupon

(56) Documents cités:
- WO-A1-2007/064225
- WO-A1-2016/038184
- GB-A- 2 063 273
- US-A1- 2009 226 580
- DATABASE WPI Week 2020007, Derwent World Patents Index; AN 2020-91595Y, XP002805829

## Description

La présente invention concerne le domaine alimentaire et, plus particulièrement, l'enrichissement en protéines de produits alimentaires, notamment des produits panifiables.

La présente invention concerne plus spécifiquement un procédé de transformation de protéines du lactosérum et d'intégration de ces protéines à une matrice alimentaire, notamment un produit de panification ou tout autre produit de consommation courante.

La présente invention concerne également la matrice alimentaire enrichie en protéines de lactosérum.

Les produits obtenus par la mise en oeuvre du procédé de la présente invention présentent un intérêt tout particulier dans la prévention ou le traitement de la sarcopénie, ou fonte musculaire, chez les personnes âgées, ou bien encore dans l'alimentation des sportifs.

La prévention de la fonte musculaire du sujet âgé représente en effet un enjeu majeur de santé publique.

Il y a ainsi un besoin d'enrichissement d'aliments de base avec des protéines de bonne qualité, notamment des protéines à digestion rapide, riches en leucine, pour maintenir les capacités musculaires, au quotidien, dans un but de prévention de la sarcopénie, de réparation musculaire (par exemple après un épisode infectieux) ou de traitement de la sarcopénie.

Ce sujet fait l'objet de nombreuses recherches sur le plan physiologique et physiopathologique, notamment en ce qui concerne l'effet du vieillissement sur le métabolisme.

Les essais cliniques d'enrichissement en protéines sur de courtes durées font l'objet de nombreuses publications. Cependant, les vecteurs alimentaires utilisés dans ces études ne permettent pas d'envisager une supplémentation sur de longues périodes.

On connaît également la possibilité d'enrichir du pain à l'aide d'un concentré de protéines, notamment de protéines lactosériques, de manière à accroitre la valeur nutritive du pain, et d'apporter aux consommateurs certains avantages, comme une meilleure récupération et réparation musculaire pour les sportifs et/ou des performances physiques améliorées chez les personnes âgées.

En particulier, la demande internationale publiée sous le numéro WO 2020/105935, décrit un pain à haute teneur en protéines de petit lait, et un procédé de fabrication de celui-ci.

Dans ce procédé, on effectue une étape de pétrissage pour l'obtention d'une pâte avec un mélange contenant des protéines de petit lait, suivie d'une étape de fermentation de la pâte à une température de 25 à 30°C, pendant une durée comprise entre 20 et 60 min. La pâte ainsi fermentée est ensuite divisée en pâtons avant cuisson au four.

On connaît également la demande internationale WO 2016/038184 qui décrit un biscuit comportant une protéine de lactosérum native.

La demande américaine US 2009/226580 décrit un processus de fabrication de broyage et d'emballage de fromage à pâte filée, dans lequel des protéines de lactosérum dénaturée ou non peuvent être intégrées.

Toutefois, l'incorporation des protéines natives de lactosérum directement dans la farine pour des produits panifiables ou à base de farine est impossible en raison des propriétés physico-chimiques de ces protéines qui entraînent une augmentation de la résistance mécanique du produit fini, par une augmentation de la réticulation du pain contenant de telles protéines, ce qui accélère son rassissement. Les protéines perdent leur propriété de protéines rapides et rend le produit peu digeste, avec une texture différente d'une baguette ou d'un pain traditionnel.

En effet, les deux fractions protéiques principales du lait, que sont les caséines et les protéines du lactosérum, n'ont pas la même vitesse de digestion.

Les protéines du lactosérum restent solubles à pH acide ; elles sont rapidement libérées par l'estomac, et leurs acides aminés sont absorbés rapidement.

A l'inverse, les acides aminés des caséines précipitent dans l'estomac ; ils sont libérés lentement dans l'intestin grêle et sont absorbés plus lentement. Les protéines rapides sont plus intéressantes pour le gain de masse musculaire en raison de leur cinétique d'absorption et du fait de leur richesse en leucine.

Le fait d'ajouter des glucides aux protéines du lactosérum pourrait avoir un effet synergique et modifier la réponse métabolique.

Ces protéines du lactosérum ont également un intérêt majeur chez le sportif. Après un effort physique intense de courte ou de longue durée, la récupération musculaire dépend essentiellement de deux facteurs : la resynthèse des stocks glycogéniques et la réparation musculaire.

La reconstitution des stocks de glycogène musculaire dépend de la disponibilité en substrats glucidiques d'origine alimentaire.

L'autre point majeur de la récupération est la resynthèse des protéines mobilisées pendant l'effort. La récupération des lésions structurales nécessite plusieurs jours jusqu'à plusieurs semaines.

Ce point est le facteur critique qui conditionne le temps de récupération des efforts très prolongés. L'efficacité nutritionnelle des protéines est donc fondamentale à prendre en compte.

L'apport alimentaire doit permettre l'approvisionnement en acides aminés indispensables, à savoir l'isoleucine, la leucine, la valine, la lysine, la méthionine, la phénylalanine, la thréonine, le tryptophane et l'histidine.

Différentes études ont permis de montrer que, dans la phase de récupération précoce, les protéines du lactosérum accélèrent la réparation musculaire et favorisent l'augmentation de la masse, de la force et des performances musculaires. Les protéines du lactosérum présentent également des avantages chez les sujets non sportifs, en condition de repos, pour lesquels la synthèse protéique est stimulée, sous l'effet notamment de la leucine.

Cependant, l'augmentation des apports en protéines de bonne qualité doit se faire de façon quotidienne, et être soit répartie sur les trois repas, soit concentrée sur un seul repas, tout en étant poursuivie dans le temps pour lutter contre la sarcopénie (fonte musculaire), notamment chez les personnes âgées.

Or, il n'y a, actuellement, aucune solution simple qui soit accessible à tous et qui puisse être intégrée à un repas traditionnel pour atteindre les objectifs mentionnés ci-dessus.

L'utilisation des Compléments Nutritionnels Oraux (CNO) représente un coût élevé et de tels compléments ont surtout une observance médiocre et une durée de prise limitée dans le temps, ce qui constitue un frein majeur dans la prévention de la fonte musculaire.

A noter également que les produits enrichis actuels, essentiellement en caséine et en protéines végétales, répondent mal à la physiologie du sujet âgé.

En effet, chez la personne âgée, les protéines sont piégées par l'intestin et le foie et atteignent difficilement le muscle. Or, il faut dépasser ce seuil pour favoriser la synthèse de protéines musculaires.

Pour dépasser ce seuil, il faut soit augmenter de façon importante les apports, soit favoriser les protéines de digestion rapide, permettant d'atteindre rapidement un « pic » plasmatique d'acides aminés et favoriser la synthèse de protéines musculaires.

Cette solution est la plus efficace et peut être la plus durable dans le temps. Les protéines utilisées dans les CNO ou autres produits comportent des protéines à digestion lente. Actuellement, il n'existe aucun produit fini enrichi en protéine à digestion rapide. Cette situation est essentiellement due aux difficultés techniques de maîtriser la matrice alimentaire (base lactée nécessitant le chauffage dans un milieu basique...).

Chez le sportif, la prise de protéines de lactosérum actuellement disponible est une forme soluble, aromatisée, diluée dans de l'eau ou du lait, qui ne comporte pas de source glucidique et dont les caractéristiques organoleptiques limitent la prise.

On connaît également, dans l'état de la technique, le document CN 111642563 concerne la préparation d'une poudre de lactosérum à haute teneur en huile, comprenant les étapes suivantes :
- dissolution de protéines de lactosérum dans de l'eau déionisée pour préparer une solution ayant une concentration comprise entre 0.5 et 8% (m/v) en protéines ;
- homogénéisation et hydratation des protéines à 55-65°C pendant 30 min puis maintien de la température à 80-90°C pendant 10 à 30 minutes, avant un refroidissement de la solution de protéines de lactosérum dénaturées à la chaleur jusqu'à température ambiante, et ajustement du pH entre 6,5 et 7
- mélange de la solution de protéines dénaturées à la chaleur ainsi obtenue avec de l'huile, dispersion et homogénéisation à haute vitesse, traitement d'émulsion à ultrasons, ajout de poudre de lactosérum dessalée et de l'eau pour préparer la poudre de lactosérum liquide à haute teneur en huile, broyage colloïdal, homogénéisation haute pression, stérilisation et séchage.

La poudre de lactosérum à haute teneur en huile comprend de 0,5 à 2% de protéines dénaturées thermiquement, de 8,75 à 13,75 % d'huile mélangée, et de 10 à 17,5% de poudre de lactosérum dessalée D90, ainsi que le restant d'eau.

On connaît également, du document de brevet GB 2 063 273, une méthode de préparation de compositions de protéines solubles de lactosérum dénaturées, comprenant l'augmentation du pH d'une solution aqueuse de protéines natives de lactosérum à une valeur supérieure à 6,5 et chauffage de la solution ainsi obtenue à une température plus de 1 min à plus de 75°C, notamment à 80-90°C pendant 15 à 30 min.

La solution est ensuite refroidie puis le pH est diminué pour rendre insolubles les protéines dénaturées, et pouvoir les récupérer par centrifugation.

Le document WO 2007/064225 décrit également un procédé dans lequel les protéines de lactosérum sont dénaturées à la chaleur, à une température comprise entre 72 et 110 °C, pendant une durée de 1 à 10 min, en présence d'huile, pour une encapsulation de cette dernière.

Les procédés décrits dans ces documents mettent en oeuvre une dénaturation irréversible des protéines de lactosérum par la chaleur, à savoir que les structures secondaires et tertiaires des protéines subissent des modifications importantes.

Par conséquent, une modification des propriétés mécaniques des protéines se produit, plus particulièrement une gélification, ce qui impacte la texture du produit final.

En outre, la dénaturation à la chaleur des protéines de lactosérum aboutit à des changements de goût et de perception oro-pharyngée, comme une augmentation des sensations d'astringence et d'amertume, lorsque lesdites protéines sont destinées à être consommées, seules ou après avoir été mélangées à une matrice alimentaire. De telles sensations sont désagréables et difficilement acceptables par les consommateurs, notamment les personnes âgées.

Finalement, étant donné que la dénaturation thermique à la chaleur est irréversible et accentue le pouvoir de gélification des protéines ainsi dénaturées, celles-ci ne peuvent être incorporées que dans des matrices alimentaires laitières ou liquides.

La présente invention se veut à même de remédier, au moins en partie, aux inconvénients des procédés connus dans l'état de la technique.

Les inventeurs ont ainsi démontré qu'une dénaturation des protéines de lactosérum par mélange de celui-ci avec un acidifiant chimique alimentaire, ou toute autre méthode d'acidification maîtrisée, entraînant uniquement des modifications légères dans la structure tertiaire sans changements majeurs dans la structure secondaire desdites protéines, suivie ou non d'un séchage avant l'incorporation de ces protéines dans le pâton ou la farine ou dans toute autre matrice alimentaire, permet de conserver leurs propriétés de digestion rapide, tout en évitant le rassissement accéléré ou la réticulation du produit final incorporant ladite matrice alimentaire.

La solution mise au point par les inventeurs consiste donc à dénaturer chimiquement lesdites protéines de lactosérum avant incorporation dans une matrice alimentaire, puis mélanger les protéines dénaturées avec la matrice alimentaire après séchage éventuel, selon la matrice de réception.

La présente invention est ainsi plus spécifiquement relative à un procédé de dénaturation de protéines de lactosérum et de fabrication d'une matrice alimentaire enrichie en protéines de lactosérum dénaturées caractérisé en ce qu'il comporte, au moins, les étapes suivantes, prises dans l'ordre :
- On dénature des protéines de lactosérum par mélange de celles-ci avec un acidifiant chimique alimentaire en milieu liquide, pour obtenir une solution de protéines dénaturées, ladite solution présentant un pH final compris entre 2 et 6 ;
- Optionnellement, on sèche la solution obtenue à l'étape précédente jusqu'à obtenir une poudre de protéines de lactosérum dénaturées ;
- On mélange la poudre de protéines de lactosérum dénaturées ou la solution de protéines dénaturées à au moins une farine pour obtenir une matrice alimentaire enrichie en protéines de lactosérum dénaturées, ladite matrice alimentaire étant destinée à entrer dans la fabrication d'un produit alimentaire fini conservant des caractéristiques physiques similaires à celles d'un produit alimentaire fini non enrichi en protéines de lactosérum dénaturées.

On entend par « acidifiant chimique alimentaire » un acidifiant autorisé dans les procédés de fabrication de produits alimentaires, notamment par le codex Alimentarius ou codex alimentaire, en particulier l'acide lactique, l'acide citrique l'acide chlorhydrique, l'acide nitrique, l'acide acétique.

Selon des modes particuliers de réalisation du procédé de l'invention :
- on mélange une proportion de poudre ou de solution de protéines dénaturées de telle sorte à ce que celle-ci soit comprise entre 5 et 20%, de préférence entre 10 et 15%, et plus préférentiellement encore de l'ordre de, ou égale à, 12% en masse, par rapport à la masse totale de matrice alimentaire ;
- ledit acidifiant chimique alimentaire mis en oeuvre dans la première étape de dénaturation est choisi parmi l'acide citrique, l'acide lactique, l'acide chlorhydrique, l'acide nitrique et l'acide acétique ;
- l'acidifiant chimique alimentaire est ajouté dans la première étape de dénaturation jusqu'à ce le pH de la solution soit compris entre 4,2 et 4,6.
- dans une première variante du procédé, on effectue l'étape de séchage par atomisation en sorte d'obtenir une a_{w} inférieure à 0,6 ;
- dans une autre variante, on effectue l'étape de séchage par lyophilisation en sorte d'obtenir une aw inférieure à 0,6.
- lors de la première étape du procédé de l'invention, on dénature des protéines de lactosérum sous forme de poudre ; de manière alternative, on peut également dénaturer des protéines de lactosérum sous forme liquide.

La présente invention est également relative à une matrice alimentaire enrichie en protéines de lactosérum dénaturées pour la fabrication d'un produit alimentaire final, ladite matrice comprenant, en mélange, au moins une farine et des protéines de lactosérum, ladite matrice alimentaire étant caractérisée en ce que lesdites protéines de lactosérum sont dénaturées par acidification chimique à un pH compris entre 2 et 6, de préférence à un pH entre 4,2 et 4,6, lesdites protéines dénaturées étant sous forme de poudre ou sous forme liquide, la proportion de protéines dénaturées étant comprise entre 5 et 20% (m/m), de préférence entre 10 et 15%, et plus préférentiellement encore de l'ordre de, ou égale à, 12% en masse, par rapport à la masse totale de matrice alimentaire.

La matrice alimentaire consiste plus préférentiellement en une farine, ou encore en une farine additionnée de protéines végétales, destinée à entrer dans la composition de produits de panification (par exemple pains, viennoiseries, pâtisseries, etc.) ou de pâtes.

Ainsi, la présente invention concerne également un produit de panification incorporant une telle matrice alimentaire, ledit produit de panification comportant une masse comprise entre 5 et 20g, de préférence une masse comprise entre 8 et 15g, de protéines de lactosérum dénaturées, par 100 g de produit.

Le produit final peut également consister en des pâtes alimentaires, incorporant dans leur composition, une matrice alimentaire selon la revendication 1, lesdites pâtes étant caractérisées en ce qu'elles comportent une masse comprise entre 5 et 40g, de préférence entre 20 et 35g, de protéines de lactosérum dénaturées par 100 g de pâtes sèches.

Le produit final, à savoir par exemple le produit de panification, les pâtes alimentaires, obtenu au moyen d'une farine enrichie en protéines de lactosérum dénaturées par le procédé de la présente invention, ne présente pas de modification de sa texture en comparaison avec un produit obtenu à partir d'une farine non enrichie, et conserve une digestibilité optimale, contrairement à des produits incorporant des protéines de lactosérum natives ou dénaturées de manière irréversible par la chaleur selon les procédés existants .

D'autres buts et avantages de la présente invention apparaîtront au cours de la description qui va suivre se rapportant à des modes de réalisation qui ne sont donnés qu'à titre d'exemples indicatifs et non limitatifs.

La présente invention concerne ainsi plus particulièrement une matrice alimentaire enrichie en protéines de lactosérum dénaturées à pH acide, en particulier entre 2 et 6, et destinée à entrer dans la fabrication d'un produit alimentaire final, ladite matrice comprenant, en mélange, au moins une farine et des protéines de lactosérum.

Elle concerne également un procédé de dénaturation de protéines de lactosérum et de fabrication d'une matrice alimentaire enrichie en protéines de lactosérum dénaturées.

Les protéines de lactosérum sont des protéines dites « protéines rapides », qui permettent, après leur ingestion, d'obtenir un pic d'acides aminés riche en leucine. Cet acide aminé est un stimulant connu de la synthèse protéique musculaire.

En plus de présenter des propriétés fonctionnelles intéressantes, les protéines du lactosérum possèdent d'excellentes propriétés nutritionnelles ayant des bénéfices sur la santé.

En effet, ces protéines de lactosérum ont globalement une teneur élevée en acides aminés essentiels, branchés et soufrés. Ceux-ci sont rapidement digérés dans l'estomac et assimilés au niveau de l'intestin. Plus précisément, l'α-lactalbumine et la β-lactoglobuline contiennent respectivement 23 et 28 % des acides aminés ramifiés qui permettent de lutter contre la fonte musculaire et qui sont indispensables pour la régénération des muscles. D'autre part, ces deux protéines permettraient de stimuler les défenses immunitaires et leur hydrolyse confère des bénéfices santé grâce à la génération de peptides bioactifs : propriétés antitumorales, antivirales et hypotensives.

La matrice alimentaire destinée à être enrichie en protéines sériques dénaturées peut consister en tout produit de consommation courante.

Plus particulièrement, la matrice alimentaire peut consister en une farine destinée à entrer dans la fabrication d'un produit de panification, ladite farine pouvant être avantageusement supplémentée en protéines végétales.

Il est ainsi possible de proposer à des professionnels du secteur agroalimentaire une farine, ou toute autre matrice alimentaire enrichie en protéines de lactosérum dénaturées, dont la composition est parfaitement dosée en protéines dénaturée et optimisée pour les objectifs à atteindre, à savoir permettre de prévenir ou de lutter contre la sarcopénie chez les personnes âgées, ou bien faciliter la récupération musculaire chez les sujets sportifs, tout en conservant des propriétés optimales en termes de digestibilité, de caractéristiques physiques, et de qualités organoleptiques du produit final.

Il est également envisageable que la matrice alimentaire consiste en tout autre produit de panification, ou en un produit laitier ou tout autre produit alimentaire, solide ou liquide (boissons, biscuits, gâteaux, compléments alimentaires...)

La poudre de protéines dénaturées peut également être consommée directement, sous forme liquide après dissolution dans de l'eau ou autre liquide (lait par exemple).

Les produits de consommation courante de ce type (produits de panification, produits lactés...) garantissent une meilleure efficacité sur la synthèse de protéines musculaires sur le long terme en raison de la rapidité de digestion (effet bolus de protéines), de leur composition idéale et de la prise quotidienne au long cours de cet aliment à tous les âges.

Pour en revenir à présent au procédé conforme à l'invention pour l'obtention d'une matrice alimentaire enrichie en protéines de lactosérum dénaturées, dans une première étape essentielle de celui-ci, on procède à une dénaturation de protéines sériques natives, étape au cours de laquelle ces dernières perdent leur conformation tridimensionnelle habituelle.

Il a en effet été mis en évidence, par les inventeurs, que la dénaturation des protéines est essentielle avant l'incorporation à la matrice alimentaire, par exemple un pâton ou une farine, afin de répondre aux problématiques soulevées par une supplémentation d'un produit avec des protéines sériques natives, à savoir la mauvaise digestibilité dudit produit et la réticulation du produit fini, ou bien encore à l'absence de miscibilité dans l'eau en l'absence d'adjuvant permettant une hydrolyse partielle desdites protéines.

Comme indiqué en préambule dans cette demande, il est connu de procéder à une dénaturation des protéines par l'application d'un traitement thermique, en appliquant un couple température/temps à celles-ci.

Il est donc notamment envisageable d'incorporer des protéines de lactosérum progressivement à de l'eau bouillante, préalablement à une incorporation de celles-ci à une matrice alimentaire, par exemple un pâton.

Cela étant, la mise en oeuvre d'une dénaturation thermique des protéines ne peut être effectuée que pour des petites quantités de matrice alimentaire, notamment dans le cas d'incorporation de protéines dénaturées à des produits de panification type pâtons, pour éviter une modification trop importante de la texture (gélification) du produit final. Ainsi, dans le cas de trop faibles quantités incorporées, la supplémentation en protéines n'est pas suffisante pour le consommateur final, dans le cas d'utilisation chez les personnes âgées ou les sportifs en phase de récupération.

Par conséquent, les inventeurs ont déterminé que la dénaturation des protéines de lactosérum doit être effectuée par une mise en contact desdites protéines avec un produit chimique acidifiant, celui-ci devant être plus spécifiquement un acidifiant alimentaire dont l'utilisation est autorisée dans le domaine de l'agroalimentaire, en particulier par le codex Alimentarius ou codex alimentaire.

En outre, cette dénaturation chimique acide des protéines natives de lactosérum doit être effectuée, dans le procédé de l'invention, sans élévation de la température au cours de cette étape. En d'autres termes, on cherche ici à éviter à tout prix, dans le procédé objet de l'invention, une dénaturation thermique des protéines de lactosérum qui entraine des modifications trop importantes, irréversibles, dans la structure secondaire et dans la structure tertiaire des protéines, qui entraîne des conséquences sur la texture de la matrice finale et sur sa digestibilité. En d'autres termes, dans le procédé de l'invention, il n'est pas effectué de dénaturation thermique des protéines de lactosérum.

Tout préférentiellement, l'acidifiant chimique alimentaire qui est mis en oeuvre dans la première étape du procédé pour réaliser la dénaturation des protéines de lactosérum est choisi parmi l'acide lactique, l'acide citrique, l'acide chlorhydrique, l'acide nitrique, l'acide acétique.

L'acide lactique est particulièrement préféré dans certaines applications pour lesquelles on souhaite donner à la matrice un goût « fermentaire » de type lactique.

Dans d'autres applications, pour lesquelles un goût neutre du point de vue organoleptique sera recherché, les acides forts seront préférentiellement mis en oeuvre dans le procédé de l'invention pour la dénaturation des protéines de lactosérum.

L'acidifiant chimique peut également consister en un mélange comportant de l'acide lactique et de l'acide citrique.

Plus particulièrement, on dénature les protéines de lactosérum par mélange de celles-ci avec l'acidifiant chimique alimentaire et la dénaturation s'effectue en milieu liquide.

Dans cette première étape, on fait en sorte que la solution liquide incorporant les protéines de lactosérum et l'acidifiant présente un pH final compris entre 2 et 6, de préférence entre 4 et 5, le pH final de cette solution étant encore plus préférentiellement compris entre 4,2 et 4,6.

Les protéines de lactosérum consistent en un mélange de protéines globulaires qui sont extraites du lactosérum, ce dernier consistant en un liquide résiduel produit lors de la coagulation du lait, en début du procédé de production des fromages. Elles peuvent également être issues de séparation par filtration membranaire.

Pour la mise en oeuvre du procédé de l'invention, les protéines de lactosérum peuvent se présenter sous la forme d'une poudre.

Dans cet exemple de réalisation, une quantité d'acidifiant chimique alimentaire, notamment d'acide citrique ou d'acide lactique, ou tout autre acidifiant autorisé dans les procédés de fabrication de produits alimentaires et permettant d'atteindre un pH idéalement entre 4 et 5, plus préférentiellement entre 4,2 et 4,6 dans la solution finale, est ajoutée et mélangée à la poudre de lactosérum avant dilution.

On ajoute ensuite une quantité de liquide pour permettre l'acidification des protéines et une dilution de celles-ci.

Dans un autre exemple de réalisation, les protéines de lactosérum peuvent se présenter sous une forme liquide, et, dans ce cas de figure, le lactosérum peut être délactosé ou non.

Dans cette hypothèse, la dénaturation des protéines par acidification est effectuée en ajoutant directement, dans la solution liquide de protéines de lactosérum, un acidifiant chimique alimentaire, dans une quantité permettant d'atteindre un pH compris entre 4 et 5, avantageusement entre 4,2 et 4,6 dans la solution finale.

Ainsi, lors de la mise en oeuvre du procédé de l'invention, un suivi du pH de la solution est avantageusement effectué, par tous moyens adaptés et connus de l'homme du métier, et ce afin de déterminer précisément le moment où ladite solution atteint le pH cible permettant une dénaturation efficace des protéines de lactosérum.

En ce qui concerne l'acidifiant chimique alimentaire qui est destiné à être mélangé aux protéines natives de lactosérum afin d'entrainer leur dénaturation, celui-ci peut également se présenter sous forme de poudre ou sous forme liquide.

La mise en oeuvre d'une dénaturation des protéines de lactosérum par mise en présence de celles-ci avec un acidifiant chimique alimentaire, et l'intégration de ces protéines dénaturées à une matrice alimentaire permet, contrairement à l'intégration de protéines natives de lactosérum, de conserver une texture et une digestibilité optimales de ladite matrice et du produit fini fabriqué à partir de cette dernière.

A noter également que des protéines de lactosérum dénaturées thermiquement, et la gélification des protéines qui découle de ce type de dénaturation, rendent l'incorporation de ces protéines dans un produit fini, en particulier lorsqu'il s'agit d'un produit de panification de type pâton, très difficile, voire impossible.

Une fois la dénaturation des protéines de lactosérum effectuée, dans une deuxième étape du procédé de l'invention, on peut procéder, dans une étape optionnelle qui dépend de la matrice alimentaire à laquelle les protéines dénaturées doivent être finalement incorporées, à un séchage de la solution de protéines dénaturées.

On obtient ainsi, à la fin de cette étape de séchage, une poudre de protéines de lactosérum dénaturées.

Dans un autre exemple de réalisation du procédé de l'invention, tout aussi avantageux, on incorpore directement la solution liquide de protéines dénaturées à une matrice alimentaire.

En effet, en particulier lorsque la matrice de réception consiste en un produit alimentaire liquide, lesdites protéines dénaturées peuvent être incorporées sous leur forme liquide.

Cela étant, les protéines sous forme liquide peuvent également être incorporées à une matrice solide, comportant au moins avantageusement une farine.

Pour en revenir à l'étape de séchage, celle-ci peut être effectuée, dans une première variante de réalisation, par atomisation, séchage convectif, lyophilisation ou tout autre technologie de séchage permettant de sécher en limitant les températures trop élevées.

Les paramètres du séchage appliqués sont tels que l'on obtient, à la fin de ce séchage, une activité de l'eau, ou a_{w}, inférieure à 0,6 pour garantir la stabilité microbiologique de la poudre de protéines.

Dans une deuxième variante, le séchage de la solution liquide de protéines de lactosérum dénaturée est effectué par lyophilisation à partir de ladite solution.

Lorsque l'on met en oeuvre cette étape optionnelle de séchage au cours du procédé de l'invention, il est préférable d'utiliser un acidifiant chimique alimentaire se présentant sous la forme d'une poudre, en sorte de ne pas accentuer la dilution de la solution de protéines dénaturées.

Cela étant, il est également envisageable que l'acidifiant chimique se présente sous forme liquide.

A l'issue de cette étape de séchage, on obtient une poudre de protéines de lactosérum dénaturées, et cette poudre est incorporée, dans une étape ultérieure du procédé de l'invention, à une matrice alimentaire notamment une farine.

De manière particulièrement avantageuse, on incorpore une proportion de poudre ou de solution de protéines de lactosérum dénaturées par acidification chimique de telle sorte à ce que celle-ci soit comprise entre 5 et 20%, de préférence entre 10 et 15%, et plus préférentiellement encore de l'ordre de, ou égale à, 12% en masse, par rapport à la masse totale de matrice alimentaire, quelle que soit la nature de base de cette dernière.

Ainsi, par exemple, lorsque le produit de base auquel doit être mélangé la poudre ou la solution de protéines dénaturées consiste en de la farine pour la fabrication d'un produit de panification on mélange entre 5 et 20g pour une masse finale de 100g de matrice alimentaire incluant la farine ainsi que la poudre de protéines dénaturées. En d'autres termes, on mélange 5g de protéines dénaturées, préférentiellement sous forme de poudre, et 95g de farine, ou 20g de poudre de protéines dénaturées avec 80g de farine, pour une masse finale de 100g de matrice alimentaire.

Dans le cadre de la fabrication de produits de panification, notamment de baguettes ou de pains, il est ainsi envisageable que ceux-ci soient fabriqués à partir d'une matrice alimentaire qui consiste avantageusement en un mélange de farine et de protéines dénaturées, à raison préférentiellement de 5 à 20g, de préférence 8 à 15g par 100 g de produit final (baguette ou pain).

Dans le cadre de la fabrication de pâtes alimentaires, il est envisageable d'incorporer la poudre de protéines dénaturées par acidification à raison préférentiellement
- de 5 à 40g, de préférence de 20 à 35g, de préférence 30g, pour 100g de pâtes sèches fabriquées à partir de la matrice alimentaire consistant en un mélange farine et protéines de lactosérum dénaturées, ou
- de 10 à 40g, de préférence de 20 à 35g, de préférence 30g, pour 150g de pâtes fraîches, ou
- de 10 à 40g, de préférence de 20 à 35g, de préférence 30g, pour 150g de pâtes cuites (ce qui correspond à une part).

Des tests ont été réalisés, mettant en oeuvre le présent procédé de dénaturation de protéines de lactosérum et de fabrication d'une matrice alimentaire enrichie en protéines de lactosérum dénaturées, en utilisant, en tant que matière première, des protéines de lactosérum natives sous forme de poudre et sous forme liquide.

L'acide citrique et lactique en tant qu'acidifiant chimique alimentaire ont été utilisés pour la dénaturation des protéines de lactosérum, avec un pH cible de 4,4 dans la solution liquide comportant les protéines de lactosérum et ledit acidifiant.

De manière générale, l'acidifiant chimique alimentaire est mélangé aux protéines de lactosérum, en solution liquide, et on suit l'évolution du pH jusqu'à ce que celui-ci se stabilise à la valeur ciblée, qui est de préférence entre 4 et 5.

L'étape de séchage est réalisée par atomisation.

Les protéines de lactosérum dénaturées au moyen dudit acidifiant alimentaire ont été intégrées à de la farine pour la fabrication de baguettes, à raison de 20 à 25g de protéines de lactosérum dénaturées par baguette.

La production de ces baguettes a été effectuée à l'échelle pilote avec un boulanger.

Les baguettes obtenues à partir de la farine enrichie en protéines de lactosérum dénaturées ont été jugées, par un panel de consommateurs, comme présentant des qualités organoleptiques et physiques satisfaisantes, c'est-à-dire que l'on ne ressent pas de différences notables par rapport à la baguette témoin, en termes de texture du produit fini et de qualités organoleptiques de celui-ci.

Les propriétés digestibles et cliniques des protéines de lactosérum dénaturées sont, de manière particulièrement avantageuse, conservées après la fabrication du produit fini, une telle fabrication incluant des étapes de confection, de cuisson et de conservation dudit produit.

En outre, le procédé de fabrication d'une matrice alimentaire enrichie en protéines de lactosérum dénaturées de l'invention permet de garantir, à un produit final incorporant une telle matrice alimentaire, des caractéristiques physiques similaires à un produit alimentaire non enrichi en protéines de lactosérum, en particulier lorsque le produit fini consiste en un produit de panification, notamment un pain :
- Sa texture : l'analyse du profil de texture d'échantillons de pain réalisée à l'aide d'un analyseur traction/compression montre au premier jour, l'absence de différence significative entre un pain enrichi fabriqué à partir d'une matrice alimentaire (farine), incorporant des protéines de lactosérum dénaturées, obtenue par le procédé de l'invention, et un pain non enrichi (résultats non montrés).
- L'évolution de la dureté du pain, fabriqué à partir d'une matrice alimentaire contenant farine et en protéines de lactosérum dénaturées par le procédé de l'invention, est significativement ralentie par rapport au pain non enrichi. Son rassissement est donc significativement plus lent (résultats non montrés) ;
- La densité du pain enrichi en protéines de lactosérum dénaturées par le procédé de l'invention, évaluée par les procédés standards, est non significativement différente du pain standard (résultats non montrés);
- La capacité d'absorption de la mie du pain enrichi en protéines de lactosérum dénaturées par le procédé de l'invention n'est pas significativement différente du pain standard (résultats non montrés) ;
- Le procédé de fabrication permet d'obtenir une qualité organoleptique des baguettes semblable à la baguette standard.

En outre, on aboutit à une digestibilité rapide des protéines du pain enrichi, et cette digestibilité a été testée *in vitro* (selon le modèle harmonisé de digestion statique *in vitro,* INFOGEST-- résultats non montrés) ; la libération d'azote du pain enrichi en protéines de lactosérum dénaturées de l'invention est très significativement plus élevée à 90 minutes d'actions enzymatiques, que le pain enrichi par des protéines de lactosérum natives non modifiées par le procédé d'acidification.

A noter que, les caractéristiques décrites en lien avec la matrice alimentaire de l'invention sont applicables au procédé et inversement.

## Revendications

1. Matrice alimentaire enrichie en protéines de lactosérum dénaturées pour la fabrication d'un produit alimentaire final, ladite matrice comprenant, en mélange, au moins une farine et des protéines de lactosérum, ladite matrice alimentaire étant **caractérisée en ce que** lesdites protéines de lactosérum sont dénaturées par acidification chimique à un pH compris entre 2 et 6, sans dénaturation thermique des protéines de lactosérum, lesdites protéines dénaturées étant sous forme de poudre ou sous forme liquide, la proportion de protéines dénaturées étant comprise entre 5 et 20% (m/m), de préférence entre 10 et 15%, et plus préférentiellement encore de l'ordre de, ou égale à, 12% en masse, par rapport à la masse totale de matrice alimentaire.

2. Matrice alimentaire enrichie en protéines de lactosérum dénaturées pour la fabrication d'un produit alimentaire final selon la revendication 1, ladite matrice alimentaire étant **caractérisée en ce que** lesdites protéines de lactosérum sont dénaturées par acidification chimique à un pH compris entre 4,2 et 4,6.

3. Produit de panification **caractérisé en ce qu'**il incorpore dans sa composition, une matrice alimentaire selon la revendication 1 ou la revendication 2, ledit produit de panification étant **caractérisé en ce qu'**il comporte une masse comprise entre 5 et 20g, de préférence une masse comprise entre 8 et 15g, de protéines de lactosérum dénaturées, par 100 g de produit.

4. Pâtes alimentaires **caractérisées en ce qu'**elles incorporent, dans leur composition, une matrice alimentaire selon la revendication 1 ou la revendication 2, lesdites pâtes étant **caractérisées en ce qu'**elles comportent une masse comprise entre 5 et 40g, de préférence entre 20 et 35g, de protéines de lactosérum dénaturées par 100 g de pâtes sèches.

5. Procédé de dénaturation de protéines de lactosérum et de fabrication d'une matrice alimentaire enrichie en protéines de lactosérum dénaturées **caractérisé en ce qu'**il comporte, au moins, les étapes suivantes, prises dans l'ordre :
- On dénature des protéines de lactosérum par mélange de celles-ci avec un acidifiant chimique alimentaire en milieu liquide, pour obtenir une solution de protéines dénaturées, ladite solution présentant un pH final compris entre 2 et 6 ;
- Optionnellement, on sèche la solution obtenue à l'étape précédente jusqu'à obtenir une poudre de protéines de lactosérum dénaturées ;
- On mélange la poudre de protéines de lactosérum dénaturées ou la solution de protéines dénaturées à au moins une farine pour obtenir une matrice alimentaire enrichie en protéines de lactosérum dénaturées, ladite matrice alimentaire étant destinée à entrer dans la fabrication d'un produit alimentaire fini conservant des caractéristiques physiques similaires à celles d'un produit alimentaire fini non enrichi en protéines de lactosérum dénaturées ;
ledit procédé étant par ailleurs **caractérisé en ce que** la dénaturation des protéines de lactosérum n'est pas effectuée par dénaturation thermique.

6. Procédé de dénaturation de protéines de lactosérum et de fabrication d'une matrice alimentaire enrichie en protéines de lactosérum dénaturées selon la revendication 5 **caractérisé en ce que** l'on mélange une proportion de poudre ou de solution de protéines dénaturées de telle sorte à ce que celle-ci soit comprise entre 5 et 20%, de préférence entre 10 et 15%, et plus préférentiellement encore de l'ordre de, ou égale à, 12% en masse, par rapport à la masse totale de matrice alimentaire.

7. Procédé de dénaturation de protéines de lactosérum et de fabrication d'une matrice alimentaire enrichie en protéines de lactosérum dénaturées selon la revendication 5 ou la revendication 6 **caractérisé en ce que** ledit acidifiant chimique alimentaire mis en oeuvre dans la première étape de dénaturation est choisi parmi l'acide citrique, l'acide lactique, l'acide chlorhydrique, l'acide nitrique et l'acide acétique.

8. Procédé de dénaturation de protéines de lactosérum et de fabrication d'une matrice alimentaire enrichie en protéines de lactosérum dénaturées selon l'une quelconque des revendications 5 à 7 **caractérisé en ce que** l'acidifiant chimique alimentaire est ajouté dans la première étape de dénaturation jusqu'à ce le pH de la solution soit compris entre 4,2 et 4,6.

9. Procédé de dénaturation de protéines de lactosérum et de fabrication d'une matrice alimentaire enrichie en protéines de lactosérum dénaturées selon l'une quelconque des revendications 5 à 8 **caractérisé en ce que** l'on effectue l'étape de séchage par atomisation en sorte d'obtenir une a_{w} inférieure à 0,6.

10. Procédé de dénaturation de protéines de lactosérum et de fabrication d'une matrice alimentaire enrichie en protéines de lactosérum dénaturées selon l'une quelconque des revendications 5 à 8 **caractérisé en ce que** l'on effectue l'étape de séchage par lyophilisation en sorte d'obtenir une a_{w} inférieure à 0,6.

11. Procédé de dénaturation de protéines de lactosérum et de fabrication d'une matrice alimentaire enrichie en protéines de lactosérum dénaturées selon l'une quelconque des revendications 5 à 10 **caractérisé en ce que**, lors de la première étape du procédé de l'invention, on dénature des protéines de lactosérum sous forme de poudre.

12. Procédé de dénaturation de protéines de lactosérum et de fabrication d'une matrice alimentaire enrichie en protéines de lactosérum dénaturées selon l'une quelconque des revendications 5 à 11 **caractérisé en ce que**, lors de la première étape du procédé de l'invention, on dénature des protéines de lactosérum sous forme liquide.

## Patentansprüche

1. Nahrungsmittelmatrix, die mit denaturierten Molkeproteinen angereichert ist, für die Herstellung eines Nahrungsmittelendprodukts, die Matrix umfassend, in einer Mischung, mindestens ein Mehl und Molkeproteine, wobei die Nahrungsmittelmatrix **dadurch gekennzeichnet ist, dass** die Molkeproteine durch chemische Ansäuerung auf einen pH-Wert zwischen 2 und 6 ohne thermische Denaturierung der Molkeproteine denaturiert werden, wobei die denaturierten Proteine in Pulverform oder in flüssiger Form vorliegen und der Anteil an denaturierten Proteinen zwischen 5 und 20 % (m/m), vorzugsweise zwischen 10 und 15 % und noch mehr bevorzugt in der Größenordnung von oder gleich 12 Masse-%, bezogen auf die Gesamtmasse der Nahrungsmittelmatrix, liegt.

2. Nahrungsmittelmatrix, die mit denaturierten Molkeproteinen angereichert ist, für die Herstellung eines Nahrungsmittelendprodukts nach Anspruch 1, wobei die Nahrungsmittelmatrix **dadurch gekennzeichnet ist, dass** die Molkeproteine durch chemische Ansäuerung auf einen pH-Wert zwischen 4,2 und 4,6 denaturiert werden.

3. Brotherstellungsprodukt, **dadurch gekennzeichnet, dass** es in seiner Zusammensetzung eine Nahrungsmittelmatrix nach Anspruch 1 oder 2 enthält, wobei das Brotherstellungsprodukt **dadurch gekennzeichnet ist, dass** es eine Masse, die zwischen 5 und 20 g liegt, vorzugsweise eine Masse, die zwischen 8 und 15 g liegt, an denaturierten Molkeproteinen pro 100 g Produkt, vorweist.

4. Teigwaren, **dadurch gekennzeichnet, dass** sie in ihrer Zusammensetzung eine Nahrungsmittelmatrix nach Anspruch 1 oder 2 enthalten, wobei die Teige **dadurch gekennzeichnet sind, dass** sie eine Masse, die zwischen 5 und 40 g, vorzugsweise zwischen 20 und 35 g, liegt, an denaturierten Molkeproteinen pro 100 g trockener Teige vorweisen.

5. Verfahren zum Denaturieren von Molkeproteinen und Herstellen einer Nahrungsmittelmatrix, die mit denaturierten Molkeproteinen angereichert ist, **dadurch gekennzeichnet, dass** es mindestens die folgenden Schritte in dieser Reihenfolge vorweist:
- Denaturieren von Molkeproteinen durch Mischen dieser mit einem chemischen Nahrungsmittelsäuerungsmittel in einem flüssigen Medium, zum Erhalten einer Lösung aus denaturierten Proteinen, wobei die Lösung einen EndpH-Wert zwischen 2 und 6 aufweist;
- optional Trocknen der in dem vorherigen Schritt erhaltenen Lösung, bis ein Pulver aus denaturierten Molkeproteinen erhalten wird;
- Mischen des Pulvers aus denaturierten Molkeproteinen oder der Lösung aus denaturierten Proteinen mit mindestens einem Mehl, zum Erhalten einer mit denaturierten Molkeproteinen angereicherte Nahrungsmittelmatrix, wobei die Nahrungsmittelmatrix für die Herstellung eines fertigen Nahrungsmittelprodukts bestimmt ist, das ähnliche physikalische Eigenschaften beibehält wie die eines fertigen Nahrungsmittelprodukts, das nicht mit denaturierten Molkeproteinen angereichert ist;
wobei das Verfahren ferner **dadurch gekennzeichnet ist, dass** die Denaturierung von Molkeproteinen nicht durch thermische Denaturierung durchgeführt wird.

6. Verfahren zum Denaturieren von Molkeproteinen und Herstellen einer Nahrungsmittelmatrix, die mit denaturierten Molkeproteinen angereichert ist, nach Anspruch 5, **dadurch gekennzeichnet, dass** ein Anteil an Pulver oder Lösung aus denaturierten Proteinen derart gemischt wird, dass dieser zwischen 5 und 20 %, vorzugsweise zwischen 10 und 15 % und noch mehr bevorzugt in der Größenordnung von oder gleich 12 Masse-%, bezogen auf die Gesamtmasse der Nahrungsmittelmatrix, liegt.

7. Verfahren zum Denaturieren von Molkeproteinen und Herstellen einer Nahrungsmittelmatrix, die mit denaturierten Molkeproteinen angereichert ist, nach Anspruch 5 oder 6, **dadurch gekennzeichnet, dass** das chemische Nahrungsmittelsäuerungsmittel, das in dem ersten Denaturierungsschritt verwendet wird, aus Zitronensäure, Milchsäure, Salzsäure, Salpetersäure und Essigsäure ausgewählt ist.

8. Verfahren zum Denaturieren von Molkeproteinen und Herstellen einer Nahrungsmittelmatrix, die mit denaturierten Molkeproteinen angereichert ist, nach einem der Ansprüche 5 bis 7, **dadurch gekennzeichnet, dass** das chemische Nahrungsmittelsäuerungsmittel in dem ersten Denaturierungsschritt zugegeben wird, bis der pH-Wert der Lösung zwischen 4,2 und 4,6 liegt.

9. Verfahren zum Denaturieren von Molkeproteinen und Herstellen einer Nahrungsmittelmatrix, die mit denaturierten Molkeproteinen angereichert ist, nach einem der Ansprüche 5 bis 8, **dadurch gekennzeichnet, dass** der Sprühtrocknungsschritt durchgeführt wird, so dass ein a_{w}-Wert von kleiner als 0,6 erhalten wird.

10. Verfahren zum Denaturieren von Molkeproteinen und Herstellen einer Nahrungsmittelmatrix, die mit denaturierten Molkeproteinen angereichert ist, nach einem der Ansprüche 5 bis 8, **dadurch gekennzeichnet, dass** der Gefriertrocknungsschritt durchgeführt wird, so dass ein a_{w}-Wert von kleiner als 0,6 erhalten wird.

11. Verfahren zum Denaturieren von Molkeproteinen und Herstellen einer Nahrungsmittelmatrix, die mit denaturierten Molkeproteinen angereichert ist, nach einem der Ansprüche 5 bis 10, **dadurch gekennzeichnet, dass** während des ersten Verfahrensschritts der Erfindung Molkeproteine in Pulverform denaturiert werden.

12. Verfahren zum Denaturieren von Molkeproteinen und Herstellen einer Nahrungsmittelmatrix, die mit denaturierten Molkeproteinen angereichert ist, nach einem der Ansprüche 5 bis 11, **dadurch gekennzeichnet, dass** während des ersten Verfahrensschritts der Erfindung Molkeproteine in flüssiger Form denaturiert werden.

## Claims

1. Food matrix enriched with denatured whey proteins for the manufacture of a final food product, said matrix comprising, in admixture, at least one flour and whey proteins, said food matrix being **characterized in that** said whey proteins are denatured by chemical acidification at a pH of between 2 and 6, without thermal denaturation of the whey proteins, said denatured proteins being in powder form or in liquid form, the proportion of denatured proteins being between 5 and 20% (m/m), preferably between 10 and 15%, and even more preferably of the order of, or equal to, 12% by mass, relative to the total mass of food matrix.

2. Food matrix enriched with denatured whey proteins for the manufacture of a final food product according to claim 1, said food matrix being **characterized in that** said whey proteins are denatured by chemical acidification at a pH of between 4.2 and 4.6.

3. Bread product **characterized in that** it incorporates, in its composition, a food matrix according to either claim 1 or claim 2, said bread product being **characterized in that** it comprises a mass of between 5 and 20 g, preferably a mass of between 8 and 15 g, of denatured whey proteins, per 100 g of product.

4. Pasta **characterized in that** it incorporates, in its composition, a food matrix according to either claim 1 or claim 2, said pasta being **characterized in that** it comprises a mass of between 5 and 40 g, preferably between 20 and 35 g, of denatured whey proteins per 100 g of dry pasta.

5. Process for denaturing whey proteins and manufacturing a food matrix enriched with denatured whey proteins, **characterized in that** it comprises at least the following steps, taken in order:
- denaturing whey proteins by mixing them with a food chemical acidifier in a liquid medium in order to obtain a solution of denatured proteins, said solution having a final pH of between 2 and 6;
- optionally, drying the solution obtained in the previous step until a denatured whey protein powder is obtained;
- mixing the denatured whey protein powder or the denatured protein solution with at least one flour to obtain a food matrix enriched with denatured whey proteins, said food matrix being intended for use in the manufacture of a finished food product retaining physical characteristics similar to those of a finished food product not enriched with denatured whey proteins;
said process being further **characterized in that** the denaturation of whey proteins is not carried out by thermal denaturation.

6. Process for denaturing whey proteins and manufacturing a food matrix enriched with denatured whey proteins according to claim 5, **characterized in that** a proportion of denatured protein powder or solution is mixed in such a way that it is between 5 and 20%, preferably between 10 and 15%, and even more preferably of the order of, or equal to, 12% by mass, relative to the total mass of food matrix.

7. Process for denaturing whey proteins and manufacturing a food matrix enriched with denatured whey proteins according to either claim 5 or claim 6, **characterized in that** said food chemical acidifier used in the first denaturing step is chosen from citric acid, lactic acid, hydrochloric acid, nitric acid and acetic acid.

8. Process for denaturing whey proteins and manufacturing a food matrix enriched with denatured whey proteins according to any of claims 5 to 7, **characterized in that** the food chemical acidifier is added in the first denaturing step until the pH of the solution is between 4.2 and 4.6.

9. Process for denaturing whey proteins and manufacturing a food matrix enriched with denatured whey proteins according to any of claims 5 to 8, **characterized in that** the drying step is carried out by spray-drying so as to obtain an a_{w} of less than 0.6.

10. Process for denaturing whey proteins and manufacturing a food matrix enriched with denatured whey proteins according to any of claims 5 to 8, **characterized in that** the drying step is carried out by freeze-drying so as to obtain an a_{w} of less than 0.6.

11. Process for denaturing whey proteins and manufacturing a food matrix enriched with denatured whey proteins according to any of claims 5 to 10, **characterized in that,** in the first step of the process of the invention, whey proteins in powder form are denatured.

12. Process for denaturing whey proteins and manufacturing a food matrix enriched with denatured whey proteins according to any of claims 5 to 11, **characterized in that,** in the first step of the process of the invention, whey proteins in liquid form are denatured.
